(19) Europäisches Patentamt
European Patent Office
Office européen des brevets

(11) EP 4 696 982 A1

(12) **EUROPEAN PATENT APPLICATION**
published in accordance with Art. 153(4) EPC

(43) Date of publication:
18.02.2026 Bulletin 2026/08

(21) Application number: 24788721.9

(22) Date of filing: 09.04.2024

(51) International Patent Classification (IPC):
*G01C 15/00* (2006.01)

(52) Cooperative Patent Classification (CPC):
G01B 11/30; G01C 7/04; G01C 15/00

(86) International application number:
PCT/JP2024/014405

(87) International publication number:
WO 2024/214697 (17.10.2024 Gazette 2024/42)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.04.2023 JP 2023064518

(71) Applicant: Topcon Corporation
Tokyo 174-8580 (JP)

(72) Inventor: NISHITA, Nobuyuki
Tokyo 174-8580 (JP)

(74) Representative: Louis Pöhlau Lohrentz
Patentanwälte
Merianstrasse 26
90409 Nürnberg (DE)

(54) **SURVEYING SYSTEM**

(57) A surveying system comprises a height measuring device (1) and a high-low deviation measuring device (2). The high-low deviation measuring device comprises a measurement target (18), a moving vehicle (15), and an unevenness measuring device (14) mounted on the moving vehicle. A reference level measuring device comprises the height measuring device and the measurement target detects a reference level. The high-low deviation measuring device further comprises a distance measurement sensor positioned to satisfy a predetermined positional relationship with the measurement target and configured to measure a distance to a construction surface, a projector (17) configured to project high-low information onto a construction surface, and an arithmetic control module (21) configured to calculate the high-low information based on the reference level, distance information with respect to the construction surface measured by the distance measurement sensor, and a designed height of a construction finished surface.

FIG.1

EP 4 696 982 A1

## Description

### Field of the Invention

The present disclosure relates to a surveying system which determines an unevenness state of a measurement target surface.

### Background Art

Concrete placing work or ground leveling work is required to eliminate surface unevenness from working surfaces, referred to as placed surfaces or leveled surfaces, and to construct the surfaces to a specified height.

Conventionally, concrete placing work involves, for instance, height measuring work, in which a worker places a measuring rod on the placed surfaces of the concrete at predetermined spatial intervals to measure the height thereof.

After the height measuring work, the worker determines whether there is surface unevenness on the concrete; if so, the worker instructs correction work to be performed, such as adding concrete to concave portions and removing concrete from convex portions, to make the surface level and/or flat.

These conventional practices require a large number of individual manual height measurements, resulting in poor workability in detecting surface unevenness, and also involve separate and repetitive processes for the concrete placing work, the height measuring work, and the correction work, resulting in poor work efficiency.

Ground leveling work also involves height measuring work in which a worker stretches a string at a predetermined height after the ground leveling to measure the height and detect surface unevenness of the ground surface; if any deviation or unevenness is detected with respect to the specified height, correction work is performed, such as filling or removing soil.

Alternatively, when a leveling material other than concrete, such as sand, gravel, or beads, is placed to correct the surface (which is referred to as "placing work"), a worker also measures the height manually; if any irregularity is detected, correction work is repeatedly performed, such as adding or removing the leveling material.

### Citation List

### Patent Literature

Patent Literature 1: JP H07-49228 A

Patent Literature 2: JP 6130078 A

Patent Literature 3: US 2011/0235053 A

Patent Literature 4: JP 2005-140523 A

Patent Literature 5: JP 2006-84346 A

Patent Literature 6: JP H09-210687 A

Patent Literature 7: JP 2004-45159 A

### Summary of Invention

### Problems to Be Solved by the Invention

It is an object of the present disclosure to provide a surveying system that can easily measure a deviation or an unevenness state of a measurement target surface with respect to a specified height, and that enables construction work, such as placing work or ground leveling work, to be performed in parallel with the height or unevenness measurement of a measurement target surface.

**Means for Solving the Problems**

Some embodiments provide for a surveying system comprising a height measuring device and a high-low deviation measuring device, wherein the high-low deviation measuring device comprises a measurement target, a moving vehicle, and an unevenness measuring device mounted on the moving vehicle, wherein a reference level measuring device comprises the height measuring device and the measurement target, the reference level measuring device is configured to detect a reference level, wherein the high-low deviation measuring device further comprises a distance measurement sensor positioned to satisfy a predetermined positional relationship with the measurement target and configured to measure a distance to a construction surface a projector configured to project high-low information onto a construction surface, and an arithmetic control module configured to calculate the high-low information based on the reference level, distance information with respect to the construction surface measured by the distance measurement sensor, and a designed height of a construction finished surface.

Some embodiments provide for a surveying system wherein the height measuring device forms a horizontal reference plane with a predetermined height, and wherein the measurement target is a photodetector configured to detect the horizontal reference plane, and the arithmetic control module is further configured to calculate the reference level based on a detected result of the photodetector.

Some embodiments provide for a surveying system wherein the measurement target is a prism, wherein the height measuring device is a surveying instrument which is provided at a predetermined height, and has a tracking function and a TS communication module configured to transmit measurement results of the measurement target, wherein the high-low deviation measuring device comprises a terminal communication module configured receive measurement results from the TS communication module, and wherein the arithmetic control module is further configured to acquire the measurement results via the terminal communication module and calculate the reference level based on the measurement results.

Some embodiments provide for a surveying system wherein the high-low deviation measuring device further comprises a tilt sensor, and wherein the arithmetic control module is further configured to correct the high-low information based on a detection result of the tilt sensor.

Some embodiments provide for a surveying system wherein the high-low deviation measuring device further comprises a tilt sensor, and wherein the arithmetic control module is configured to correct distance measurement results of the distance measurement sensor based on a detection result of the tilt sensor.

Some embodiments provide for a surveying system wherein the moving vehicle is a drone.

Some embodiments provide for a surveying system wherein the moving vehicle is a ground vehicle.

Additionally, some embodiments provide for a surveying system wherein the moving vehicle comprises a tracking device and is configured to follow a person's movement.

**Advantageous Effect of Invention**

According to the present disclosure, a surveying system is provided comprising a height measuring device and a high-low deviation measuring device, wherein the high-low deviation measuring device comprises a measurement target, a moving vehicle, and an unevenness measuring device mounted on the moving vehicle, wherein a reference level measuring device comprises the height measuring device and the measurement target, the reference level measuring device is configured to detect a reference level, wherein the high-low deviation measuring device further comprises a distance measurement sensor positioned to satisfy a predetermined positional relationship with the measurement target and configured to measure a distance to a construction surface, a projector configured to project high-low information onto a construction surface, and an arithmetic control module configured to calculate the high-low information based on the reference level, distance information with respect to the construction surface measured by the distance measurement sensor, and a designed height of a construction finished surface. Therefore, an unevenness state of the measurement target surface can be easily visually observed, since the measurement information and the high-low information at the location are directly projected, which enables the construction work, such as the placing work or the ground leveling work, in parallel with the measurement of the unevenness state.

**Brief Description of the Drawings**

[FIG. 1] FIG. 1 is a schematic diagram of a surveying system according to a first embodiment.
[FIG. 2] FIG. 2 is a schematic block diagram of a laser level planer according to the first embodiment.
[FIG. 3] FIG. 3 is a schematic block diagram of a high-low deviation measuring device according to the first embodiment.

[FIG. 4] FIG. 4 is an explanatory diagram regarding the measurement of an unevenness state according to the first embodiment.

[FIG. 5] FIG. 5 is a flowchart of unevenness measuring work according to the first embodiment.

[FIG. 6] FIG. 6 is a schematic diagram of a surveying system according to a second embodiment.

[FIG. 7] FIG. 7 is a schematic block diagram of a total station according to the second embodiment.

[FIG. 8] FIG. 8 is a schematic block diagram of a high-low deviation measuring device according to the second embodiment.

[FIG. 9] FIG. 9 is an explanatory diagram regarding the measurement of an unevenness state according to the second embodiment.

[FIG. 10] FIG. 10 is a schematic diagram of a surveying system according to a third embodiment.

[FIG. 11] FIG. 11 is a schematic diagram of a surveying system according to a fourth embodiment.

[FIG. 12] FIG. 12 is a schematic block diagram of a high-low deviation measuring device in the fourth embodiment.

[FIG. 13] FIG. 13 is a schematic diagram of a surveying system according to a fifth embodiment.

[FIG. 14] FIG. 14 is a schematic diagram of the main part of a sixth embodiment.

## Detailed Description of the Preferred Embodiment

Embodiments of the present disclosure will be described below with reference to the accompanying drawings.

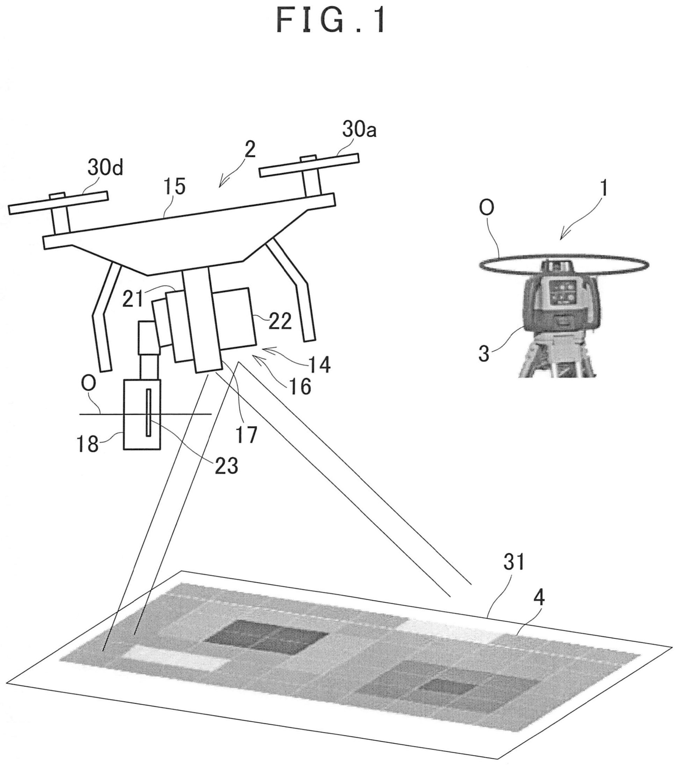

FIG. 1 shows a general diagram of a surveying system according to a first embodiment, and the surveying system mainly comprises a height measuring device 1 and a high-low deviation measuring device 2. FIG. 1 also shows an unevenness map 4.

In the first embodiment, the height measuring device 1 is implemented as a laser level planer 3. Examples of such a laser level planer 3 are disclosed in Patent Literatures 4 to 7.

The laser level planer 3 forms a horizontal reference plane at a predetermined height by using a laser beam. The horizontal reference plane may be formed by rotatably emitting the laser beam on a horizontal plane or may be formed by horizontally emitting a fan-shaped laser beam. The following description relates to an instance in which a horizontal reference plane O is formed by rotatably emitting the laser beam on a horizontal plane.

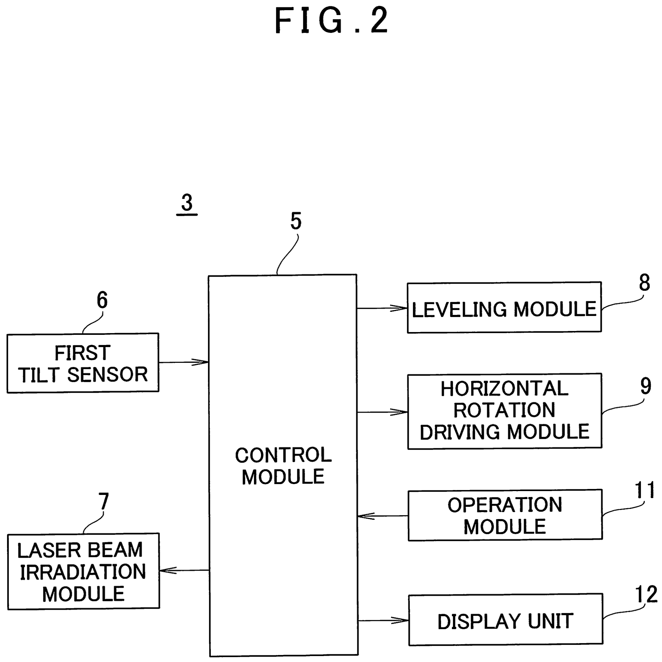

With reference to FIG. 2, general features of the laser level planer 3 will be described.

The laser level planer 3 is installed at a position using a support device (not shown), such as a tripod. The laser level planer 3 mainly includes a control module 5, a first tilt sensor 6, a laser beam irradiation module 7, a leveling module 8, a horizontal rotation driving module 9, an operation module 11, and a display unit 12.

The first tilt sensor 6 detects the tilt of the laser level planer 3 with respect to the horizontal plane, i.e., the tilt of the laser beam emitted with respect to the horizontal plane. The detection result of the first tilt sensor 6 is input to the control module 5.

Based on the detection result of the first tilt sensor 6, the control module 5 instructs the leveling module 8 to drive and adjust the laser level planer 3 to be horizontal. The control module 5 instructs the laser beam irradiation module 7 to emit the laser beam, and instructs the horizontal rotation driving module 9 to rotate the laser beam irradiation module 7, thereby rotatably emitting the laser beam to form the horizontal reference plane O.

The laser level planer 3 is installed so that the horizontal reference plane O is positioned at a predetermined height. For instance, the height of the horizontal reference plane O from a reference floor surface has been determined from actual measurements or from the specifications of the laser level planer 3. Using the determined horizontal reference plane O allows the laser level planer 3 to measure the height of a measurement target surface and the height of any irregularities on the measurement target surface, with reference to the horizontal reference plane O.

Upon receiving an instruction for the laser level planer 3 via the operation module 11, such as turning the laser level planer 3 on and off, or setting its operation conditions, the display unit 12 displays the operation state.

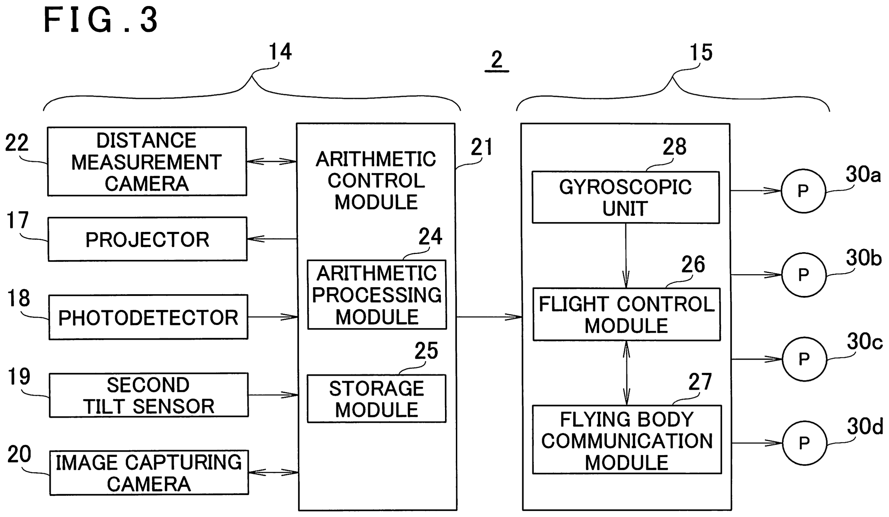

With reference to FIGS. 1 and 3, the high-low deviation measuring device 2 will be described.

The high-low deviation measuring device 2 includes a moving vehicle, a remote controller, and an unevenness measuring device 14 which is mounted on the moving vehicle. In the first embodiment, the moving vehicle is implemented as a drone 15.

The unevenness measuring device 14 mainly includes a distance measurement sensor 16, a projector 17 serving as a projector, a photodetector 18, a second tilt sensor 19, an image capturing camera 20, and an arithmetic control module 21, which are integrally assembled. In some embodiments, the image capturing camera 20 may be omitted.

The distance measurement sensor 16 and the projector 17 have a fixed and predetermined relationship between their optical axes. The distance measurement sensor 16 has a distance measurement range 31 that is configured to be larger than a projection range of the unevenness map 4 projected by the projector 17. The optical axes of the distance measurement sensor 16 and the projector 17 are configured such that the projection range is entirely within the distance measurement range 31.

The optical axes of the distance measurement sensor 16 and the projector 17 are also configured to be aligned vertically when the drone 15 is in a horizontal posture. Alternatively, the optical axes of the distance measurement sensor 16 and the projector 17 may have a predetermined angle (known angle) and an offset when the drone 15 is in a horizontal posture.

The photodetector 18, serving as a measurement target, includes a photodetection sensor 23 extending vertically with a predetermined length and parallel to the optical axis of the distance measurement sensor 16. The photodetection sensor 23 detects the laser beam and outputs a detection signal. The photodetection sensor 23 has a photodetection reference position-for instance, the vertical center or the lower end of the photodetection sensor 23-which is defined as a predetermined position in the high-low deviation measuring device 2. For example, the vertical distance between the photodetection reference position and a distance measurement reference position of the distance measurement sensor 16 is predetermined.

The detection signal includes a photodetection signal and a detection position information. The detection position information includes a deviation in the vertical direction with respect to the photodetection reference position. The detection signal is input to the arithmetic control module 21. Based on the detection signal, the arithmetic control module 21 can measure the height (level of the reference position) of the photodetection reference position with respect to the horizontal reference plane O.

The laser level planer 3, which forms the horizontal reference plane O, and the photodetection sensor 23, which detects the position of the horizontal reference plane O, function together as a reference level measuring device to measure a reference level, which serves as a measurement reference for unevenness measurement.

The distance measurement sensor 16 is oriented downward to measure a distance to the ground surface and may employ various types of sensors. As an example, a distance measurement camera 22 may be employed. The distance measurement camera 22, which includes a distance measuring element consisting of a plurality of pixels, emits a distance measuring light from each pixel and receives a reflected light at the corresponding pixel for distance measurement based on the Time Of Flight (TOF) principle, thereby acquiring distance measurement data within the field of view of the distance measurement camera 22, which corresponds to the distance measurement range 31, in a planar manner like image data. The distance measurement data output from each pixel includes position information on the distance measuring element, such as coordinate information in an orthogonal coordinate system having its origin defined on the optical axis. The distance measurement data is input to the arithmetic control module 21. Alternatively, the distance measurement data may also be acquired in a planer manner by performing high-speed two-dimensional scanning of the distance measurement light.

The projector 17 projects the unevenness information, which is described below, onto a measurement target surface.

The distance measurement camera 22 involves a measurement reference position, and measures distance from the measurement reference position. As mentioned above, a relationship between the measurement reference position of the distance measurement camera 22 and the photodetection reference position of the photodetection sensor 23 is predetermined.

Thus, the high-low deviation measuring device 2 measures the height of the horizontal reference plane O using the photodetection sensor 23 and thereby can acquire the height of the measurement reference position with respect to the horizontal reference plane O. The high-low deviation measuring device 2 may convert the distance measurement data into distance data with reference to the horizontal reference plane O.

The second tilt sensor 19 detects a tilt of the optical axis of the distance measurement camera 22 with respect to a vertical direction. The tilt detection result from the second tilt sensor 19 is input to the arithmetic control module 21. The arithmetic control module 21 may correct the distance measurement data measured by the distance measurement camera 22 based on a tilt detection result from the second tilt sensor 19 when the drone 15 is tilted.

The second tilt sensor 19 may be incorporated in the arithmetic control module 21. Alternatively, the second tilt sensor 19 may employ various types of inertial measurement unit (IMU) sensors, such as an acceleration sensor or a gyroscope.

The image capturing camera 20 has an optical axis that is parallel or substantially parallel to that of the distance measurement camera 22 and a field of view that is equal to or wider than that of the distance measurement camera 22, and is configured to acquire an image including the distance measurement range of the distance measurement camera 22. The acquired image is input to the arithmetic control module 21.

Storing images of a measured location and a construction location acquired by the image capturing camera 20 together with the unevenness information allows a worker to identify the position and location of the unevenness information from the images.

The arithmetic control module 21 includes an arithmetic processing module 24 and a storage module 25. The arithmetic processing module 24 may employ a dedicated Central Processing Unit (CPU) for the present embodiment, or various other types of processors, including a general-purpose CPU, an embedded CPU, or a microprocessor. The storage module 25 may be implemented using semiconductor memory, such as Random Access Memory (RAM), Read-Only Memory (ROM), Flash ROM, or Dynamic Random Access Memory (DRAM), or magnetic storage memory, such as a Hard Disk Drive (HDD).

The arithmetic processing module 24 executes various types of programs stored in the storage module 25 to perform processing and operations. The arithmetic processing module 24 also controls the photodetector 18, the projector 17, the image capturing camera 20, the distance measurement camera 22, and the storage module 25 to carry out necessary operations at appropriate timings. The arithmetic control module 21 feeds back a detection signal from the photodetector 18, which indicates a laser beam receiving position, to the flight control module 26, as described later.

The storage module 25 stores various types of programs to be executed in the present embodiment. The programs include, for instance, a control program for integrally managing synchronization and other tasks between the distance measurement camera 22 and the projector 17, a program for controlling the projector 17 to project unevenness information, a distance measurement program for controlling the distance measurement camera 22 to capture images and measure distances, an arithmetic program for calculating the three-dimensional data based on the distance measurement data, a program for calculating unevenness information based on the three-dimensional data.

The storage module 25 also stores various types of data, including a threshold value for determining a high-low state, a measurement result, and image data.

The term "high-low state" refers to a condition that may include a deviation with respect to a specified height of the measurement target surface, surface irregularities (unevenness) with respect to a specified plane, and a tilt with respect to a horizontal plane. The "high-low information" includes data indicating a deviation with respect to the specified height of the measurement target surface, data indicating the unevenness with respect to the specified plane, and a state of a tilt with respect to the horizontal plane.

Next, a general description of the drone 15 will be described.

The drone 15 may be a commercially available drone and has the unevenness measuring device 14 mounted on the drone's bottom surface.

The drone 15 includes a flight control module 26, an aircraft communication module 27 and a gyroscopic unit 28, and is configured to fly under remote control via a remote controller (not shown) . The flight control module 26 controls the flight posture and attitude of the drone 15 based on a signal from the gyroscopic unit 28. The flight control module 26 may control the height of the drone 15 based on a detection signal of the photodetection sensor 23 fed back from the arithmetic control module 21.

The drone 15 can fly as needed, change and set its direction, and hover under remote control. FIG. 3 shows propeller units 30a, 30b, 30c, 30d, which are driven and power-controlled by the flight control module 26.

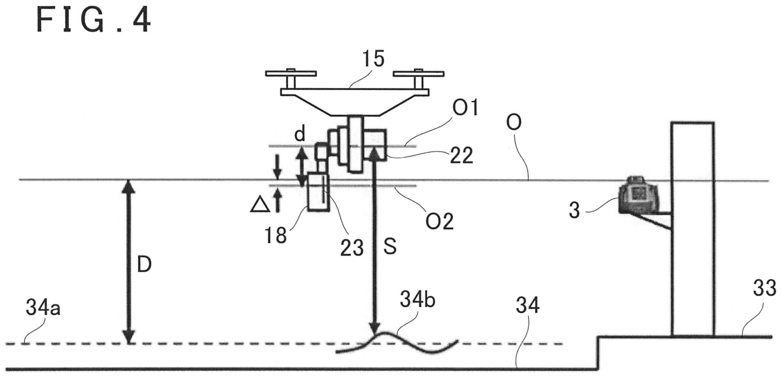

With reference to FIG. 4, a description will be given of an example in which the measurement target surface is a floor surface and its unevenness state is measured.

In FIG. 4, a floor surface 33 serves as a reference. The laser level planer 3 is installed at a predetermined height with respect to the floor surface 33, and forms a horizontal reference plane O at a predetermined height with respect to the floor surface 33.

A construction floor surface 34, which is lower than floor 33 by a predetermined height, is a floor surface on which concrete is to be placed as a leveling material up to a dashed line in FIG. 4, which indicates a construction finished surface 34a.

A worker operates the drone 15 to fly to a construction position and hover above the construction position.

The following description is based on the assumption that the drone 15 is maintained in a horizontal posture and the optical axes of the distance measurement camera 22 and the projector 17 are each maintained in a vertical posture.

In FIG. 4, horizontal lines O1 and O2 are illustrated, the horizontal line O1 passes through the measurement reference position of the distance measurement camera 22, and the horizontal line O2 passes through the photodetection reference position of the photodetection sensor 23. With respect to the horizontal reference plane O, the construction finished surface 34a is positioned at a height difference D to obtain a predetermined height (designed height) from the construction floor surface 34.

As described above, the measurement reference position and the photodetection reference position have a predetermined positional relationship, and the distance between horizontal lines O1 and O2 is a predetermined value d. A deviation $\Delta$ is defined as the displacement between the laser beam receiving position and the photodetection reference position of the photodetection sensor 23 (i.e., the deviation $\Delta$ between the horizontal reference plane O and the photodetection reference position). A distance measurement value S is defined as the distance measured by the distance measurement camera 22 to the construction surface 34b (i.e., the concrete placing surface), that is, the distance from the measurement reference position of the distance measurement camera 22 to the construction surface 34b.

The unevenness $\Delta F$ (i.e., the height difference) of the construction surface 34b with reference to the construction finished surface 34a is defined and calculated using the following expression.

$$\Delta F = D + (d - \Delta) - S \quad (\text{Expression 1})$$

In this expression, $\Delta$ takes a positive value (+) when the laser beam receiving position is located above the photodetection reference position, and a negative value (-) when it is below. The unevenness ΔF takes a positive value when construction surface 34b is convex relative to the construction finished surface 34a, and a negative value when it is concave.

The height difference D and the distance d between the measurement reference position and the photodetection reference position are preset in the arithmetic control module 21. Distance measurement results from the distance measurement camera 22 and a detection signal of the photodetection sensor 23 are each input to the arithmetic control module 21. The arithmetic control module 21 calculates the unevenness ΔF based on the height difference D, the distance d, the distance measurement results, and the detection signal.

The distance measurement camera 22 may measure distances on a per-pixel basis across the imaging element. The arithmetic control module 21 may calculate the unevenness ΔF on a per-pixel basis, thereby acquiring, in real time, the unevenness ΔF data (numerical high-low data) across the entire field of view of the distance measurement camera 22, as well as the unevenness ΔF distribution, which is obtained from the position information including the unevenness ΔF data and the distance measurement data.

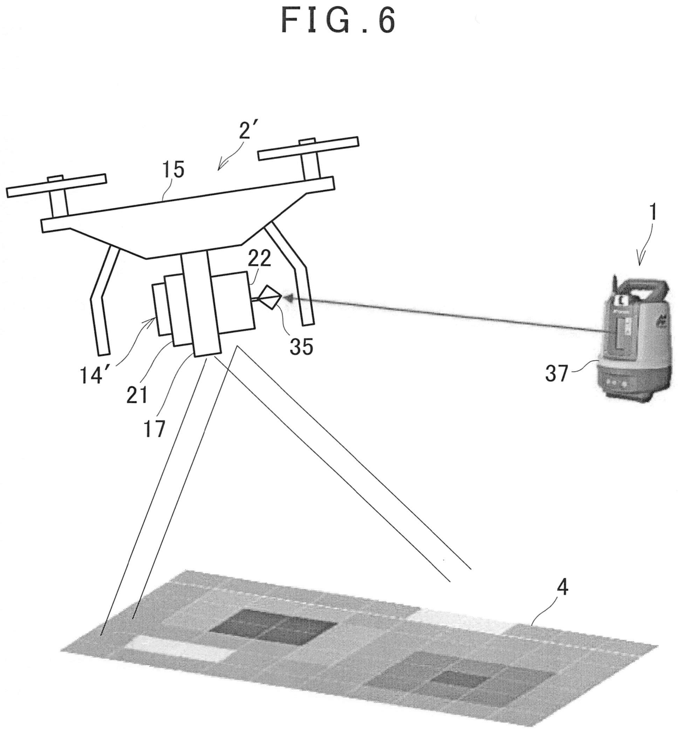

The arithmetic control module 21 may classify the unevenness ΔF using threshold values stored in the storage module 25, and create an unevenness map 4 (see FIG. 6).

The unevenness map 4 is configured, for instance, as a heat map, to visualize the unevenness ΔF, with colors corresponding to the values of the unevenness ΔF. For instance, when the unevenness ΔF is positive (+) with respect to the construction finished surface 34a, warm colors are used, and the color density or tone may be intensified for every 3 mm increase in the unevenness ΔF. Conversely, when the unevenness ΔF is negative (-) with respect to the construction finished surface 34a, cool colors are used, and the color density or tone may be reduced for each 3 mm decrease.

Alternatively, the threshold value used for the segmentation is not limited to 3 mm and may be set to an appropriate value, such as 5 mm or 1 cm, depending on the application. Alternatively, the threshold value may vary across the surface and gradually increase toward the peripheral region. Alternatively, the segmentation may be represented in a single color with varying shades.

The arithmetic control module 21 stores unevenness information, including the unevenness ΔF data, the unevenness ΔF distribution, and the unevenness map, in the storage module 25. The arithmetic further control module 21 outputs the unevenness map 4 to the projector 17 as a video signal so that the unevenness map 4 is projected onto the construction surface 34b in synchronization with the unevenness measurement by the distance measurement camera 22.

The position and range of the projected unevenness map 4 correspond to the position and distance measurement range measured by the distance measurement camera 22, so that the unevenness information of the construction surface 34b is accurately displayed by the unevenness map 4. A worker can visually observe the unevenness state of the construction surface 34b from the projected unevenness map 4. The unevenness map 4 may be continuously or intermittently projected.

When the unevenness map is projected onto the construction surface 34b during the concrete placing operation, a worker can identify and correct the unevenness state in real time. That is, the worker can perform the concrete placing work while making necessary corrections to the unevenness state.

Furthermore, when the unevenness map is projected onto the construction surface 34b after the concrete has been placed, a worker can observe the finished condition and the level of accuracy of the construction surface 34b.

In the above description, the drone 15 is assumed to be maintained in horizontal posture. However, in practice, the drone 15 may tilt or shake, and the unevenness measuring device 14 tilts or shakes along accordingly.

On the other hand, the unevenness measuring device 14 includes the second tilt sensor 19, and detects the tilt of the unevenness measuring device 14 in real time, and a tilt detection result is provided and input to the arithmetic control module 21 in real time.

The arithmetic control module 21 corrects, in real time, the measurement results of the distance measurement camera 22 (including a measured distance S shown in FIG. 4 and a measured position) based on the tilt detection result of the second tilt sensor 19. Accordingly, even if the drone 15 tilts or shakes, a corrected unevenness map is projected, allowing a worker to accurately observe the high-low information.

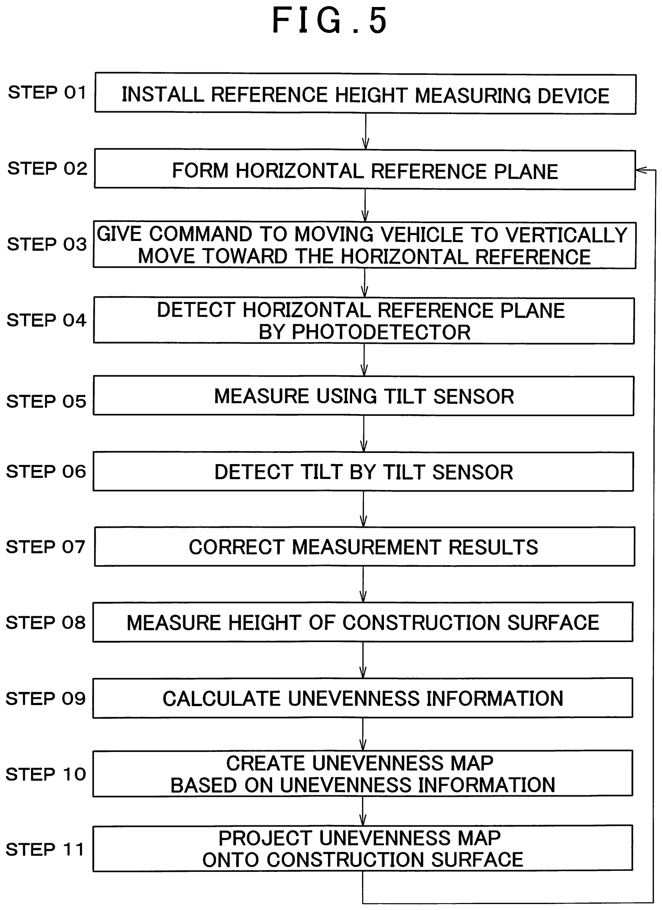

Next, with reference to FIG. 5, the unevenness measuring work will be described.

STEP:01 A worker installs the height measuring device 1 (i.e., the laser level planer 3 in the present embodiment) at a predetermined position. After the leveling operation for the height measuring device 1, the device 1 projects a laser beam to measure a height from a reference position (i.e., a position of the floor surface 33 in the present embodiment), thereby providing a height value.

STEP: 02 The height measuring device 1 rotates a laser beam and forms a horizontal reference plane O.

STEP:03 A worker instructs the drone 15 from the remote controller to move vertically toward the horizontal reference plane. The drone 15 then moves to a position where the photodetector 18 can receive the laser beam.

STEP:04 The distance measurement sensor 16 detects the horizontal reference plane O using the photodetector 18. The detection results are input to the arithmetic control module 21. The arithmetic control module 21 determines a height of the measurement reference position of the distance measurement sensor 16 (the distance measurement camera 22 in the present embodiment) with respect to the horizontal reference plane O, based on the photodetection position of the photodetection sensor 23. The detection result of the horizontal reference surface O is fed back to the flight control module 26 via the arithmetic control module 21, allowing the flight control module 26 to control a height of the drone 15 so that the photodetection sensor 23 receives the laser beam at the reference position.

STEP:05 The distance measurement sensor 16 measures the construction surface.

STEP:06 The second tilt sensor 19 detects a tilt of the optical axis of the distance sensor 16.

STEP:07 The arithmetic control module 21 corrects the measurement result from the distance sensor 16, based on the tilt detection result.

STEP:08 The arithmetic control module 21 determines a height of the construction surface 34b with respect to the horizontal reference plane O, based on the corrected measurement result (hereinafter referred to as the corrected measurement result) and on the height of the measurement reference position with respect to the horizontal reference plane O.

STEP:09 The arithmetic control module 21 calculates a height difference between the construction finished surface 34a, which has been set in advance, and the construction surface 34b, and obtains high-low information.

STEP:10 The arithmetic control module 21 creates an unevenness map image, based on the high-low information and threshold values for the segmentation, which have been set in advance.

STEP:11 The arithmetic control module 21 calculates a distance from the projector 17 to a projection plane (i.e., the construction surface 34b) based on the positional relationship between the distance sensor 16 and the projector 17 and on the corrected measurement result, and controls the projector 17 to project the unevenness map image on the projection plane.

STEP:02 to STEP:11 are repeatedly performed to acquire measurement data at other locations.

With reference to FIG. 6 to FIG. 9, a second embodiment will be described.

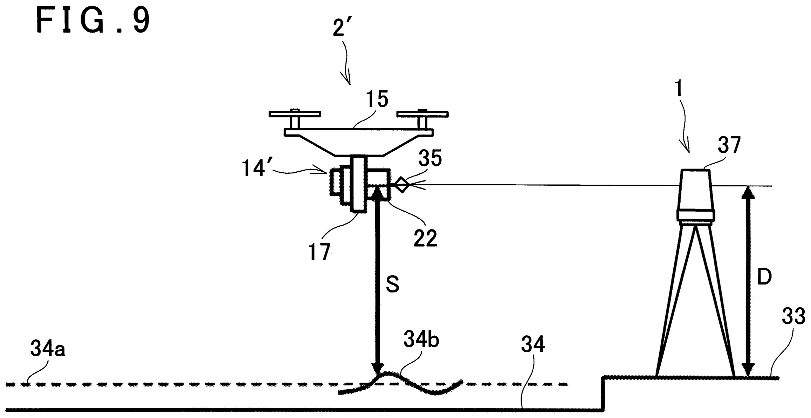

FIGS. 6 and 9 are general diagrams of a surveying system according to the second embodiment. Similar to the first embodiment, the surveying system mainly comprises a height measuring device 1 and a high-low deviation measuring device 2'.

In the second embodiment, the height measuring device 1 is implemented by an electro-optical distance measuring device with a tracking function, such as a total station 37. Alternatively, other types of measuring devices having a tracking function may be employed, including a measuring device having a tracking function based on images captured by an image sensor or a measuring device having a shape tracking function using a laser scanner.

In FIG. 9, components equivalent to those in FIG. 1 are denoted by the same reference numerals, and their detailed description are omitted.

The total station 37 is installed with its orientation leveled horizontally at a required position. The total station 37 is installed at a predetermined height. That is, the total station 37 involves a survey reference point, at which the total station 37 is installed, in three-dimensional coordinates including at least a height coordinate (height position). For instance, with reference to FIG. 9, assuming that the total station 37 is installed on the floor surface 33, which serves as a survey reference height for the measurement, the height from the floor surface 33 to the survey reference point is defined as a height D, which becomes a known value.

The high-low deviation measuring device 2', which is similar to the first embodiment, includes a moving vehicle, a remote controller, and an unevenness measuring device 14' which is mounted on the moving vehicle. The second embodiment employs the drone 15 as the moving vehicle, as in the first embodiment.

The high-low deviation measuring device 2' includes a prism 35 having retroreflective characteristics as a measurement target for height measurement. The position of the optical center of the prism 35 and a measurement reference position of the distance measurement camera 22 have a predetermined positional relationship. The prism 35 may be mounted on the drone 15 or on the unevenness measuring device 14'. In essence, the prism 35 may be mounted on a position that can be sighted from the total station 37. The FIG. 9 shows that the prism 35 is mounted on the distance measurement camera 22. Alternatively, a reflective sheet may be used as a measurement target.

The total station 37 includes a telescope module (not shown) configured to sight the prism 35, emits a tracking light through the telescope module, and tracks the prism 35. The total station 37 emits a distance measuring light through the telescope module, receives a reflected light from the prism 35, and measures three-dimensional electro-optical distance with respect to the prism 35.

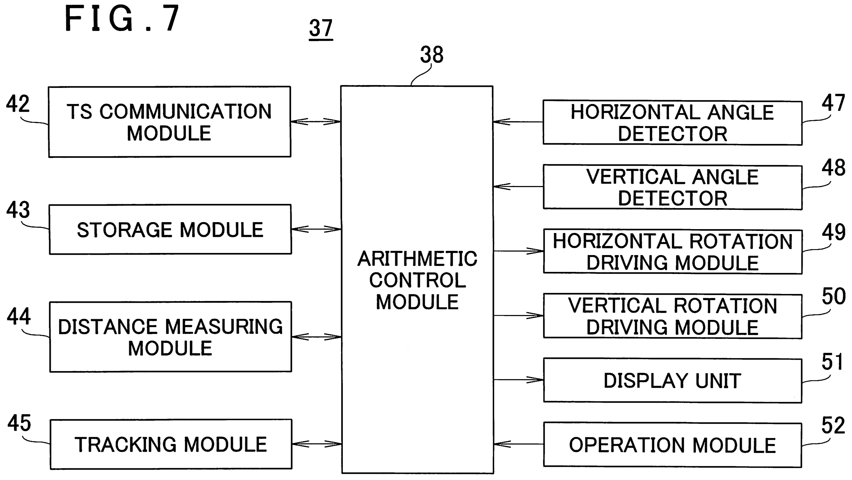

With reference to FIG. 7, a general configuration of the total station 37 will be described.

The total station 37 mainly includes an arithmetic control module 38, a TS communication module 42, a storage module 43, a distance measurement module 44, a tracking module 45, a horizontal angle detector 47, a vertical angle detector 48, a horizontal rotation driving module 49, a vertical rotation driving module 50, a display unit 51, and an operation module 52.

The arithmetic control module 38 controls the TS communication module 42, the distance measuring module 44, the tracking module 45, the horizontal rotation driving module 49, the vertical rotation driving module 50 and the display unit 51, integrally and individually, including their drive control operations and synchronization control operations.

The TS communication module 42 performs data communication with the unevenness measuring device 14'. The tracking module 45 emits a tracking light toward the prism 35 and receives the reflected light to track the prism 35. While the tracking module 45 is tracking the prism 35, the distance measurement module 44 emits a distance measuring light toward the prism 35 and receives the reflected light to measure the distance to the prism 35 which serves as a measurement target.

The horizontal angle detector 47 involves a reference point and detects the horizontal angle of the optical axis of a telescope with respect to this reference point. The vertical angle detector 48 detects a high-low angle with respect to the horizontal plane.

The horizontal rotation driving module 49 and the vertical rotation driving module 50 respectively rotate the telescope in the horizontal and vertical directions to track the prism 35. The horizontal angle detector 47 and the vertical angle detector 48 detect the horizontal and vertical angles during distance measurement. Accordingly, the total station 37 measures the distance to the measurement target and the three-dimensional coordinates of the measurement target.

The TS communication module 42 transmits, in real time, the measured three-dimensional coordinates to the unevenness measuring device 14'.

Upon receiving an instruction for the total station 37 via the operation module 52, such as turning the total station on and off, or setting its operation conditions, the display unit 12 displays the operation state of the total station 37.

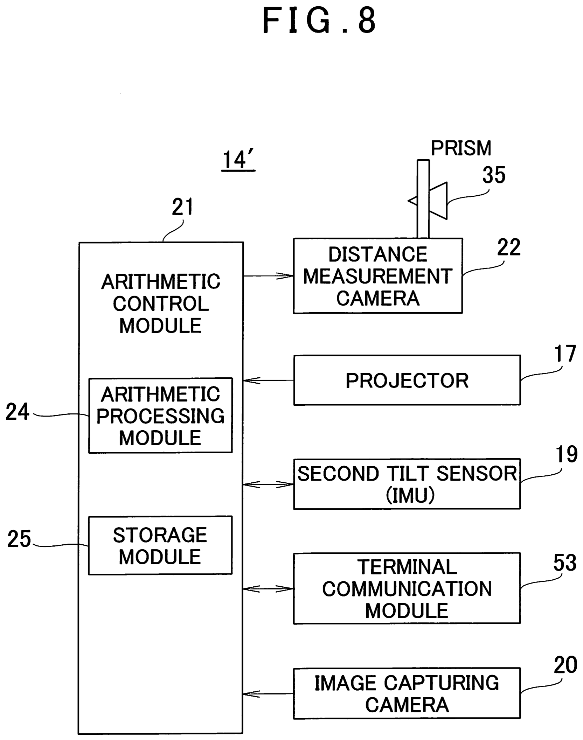

FIG. 8 shows a general diagram of the unevenness measuring device 14' in the second embodiment. The unevenness measuring device 14' in the second embodiment has substantially the same structure as the unevenness measuring device 14 in the first embodiment, except that the prism 35 is mounted in place of the photodetector 18. The unevenness measuring device 14' further includes a terminal communication module 53 for data communication with the total station 37.

In the second embodiment, the height of the prism 35 measured by the total station 37 serves as a reference for unevenness measurement, and the total station 37 and the prism 35 together function as a reference level-measuring device to measure a reference level for the unevenness measurement.

With reference to FIG. 9, the unevenness measurement in the second embodiment will be described. The components shown in FIG. 9 and the corresponding components shown in FIG. 4 are denoted by the same reference numerals, and their detailed description are omitted.

The total station 37 measures the prism 35 and transmits three-dimensional coordinate data of the prism 35 as the measurement data from the TS communication module 42 to the terminal communication module 53 of the unevenness measuring device 14'. The terminal communication module 53 outputs the received three-dimensional data to the arithmetic control module 21.

The three-dimensional data is then input to the arithmetic processing module 24, and the arithmetic processing module 24 acquires the height of the prism 35 from the three-dimensional data, that is, the height at which the total station 37 emits the distance measuring light.

The acquired height of the distance measuring light corresponds to the height of the prism 35 (i.e., the height of the optical center of the prism 35) with reference to the floor surface 33 (see FIG. 4). The acquired height serves as the reference level.

The arithmetic processing module 24 may further acquire the height of the distance measurement camera 22 with reference to the floor surface 33, based on a predetermined positional relationship between the optical center of the prism 35 and the measurement reference position of the distance measurement camera 22, and on the height of the prism 35.

Accordingly, the unevenness measuring device 14' can measure an unevenness state of the construction surface 34b based on the measurement result from the distance measurement camera 22.

The creation of the unevenness map 4 and the projection of an unevenness map image onto the construction surface 34b are the same as those of the first embodiment, and hence a description thereof are omitted.

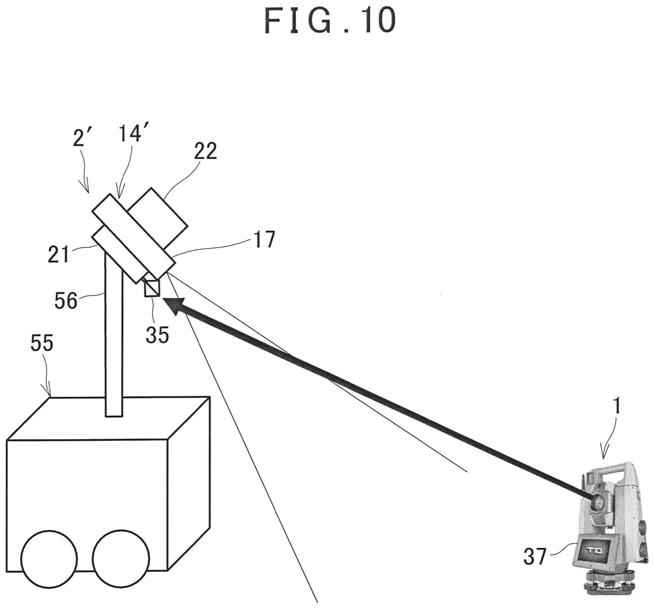

With reference to FIG. 10, a third embodiment will be described.

A surveying system according to the third embodiment comprises a height measuring device 1 and a high-low deviation measuring device 2'. The height measuring device 1 is embodied as a total station 37, and the high-low deviation measuring device 2' comprises an unevenness measuring device 14' and a self-propelled ground vehicle 55 that serves as a moving vehicle.

The total station 37 and the unevenness measuring device 14' are the same as those described in the second embodiment, and hence a description thereof are omitted.

The ground vehicle 55 travels under remote control. The unevenness measuring device 14', mounted on the ground vehicle 55 via a pole 56 that is vertically installed, includes a prism 35.

An optical center of the prism 35 and a measurement reference point of the unevenness measuring device 14' have a predetermined relationship. In the third embodiment, the distance measurement camera 22 and the projector 17 of the unevenness measuring device 14' are oriented downward and are tilted from the vertical by a predetermined angle.

The ground vehicle 55 travels under remote control to a measurement position or a construction position.

The total station 37 tracks the prism 35 and determines three-dimensional coordinates of the prism 35 at the measurement position. The total station 37 then transmits the measurement results (three-dimensional coordinates) to the unevenness measuring device 14'. The unevenness measuring device 14' determines the measurement reference level of the unevenness measuring device 14' based on the received three-dimensional coordinates and measures an unevenness of a construction surface 34b (see FIG. 9).

In the third embodiment, the total station 37 and the prism 35 together function as a reference-level measuring device to measure a reference level for the unevenness measurement.

The creation of an unevenness map 4 and the projection of an unevenness map image onto the construction surface 34b are the same as those of the first embodiment, and hence a description thereof are omitted.

Alternatively, the moving vehicle may be equipped with a satellite positioning device, such as a Global Navigation Satellite System (GNSS) device. In this embodiment, the GNSS device serves as a height measuring device that measures three-dimensional coordinates of a measurement reference position of the unevenness measuring device 14'. This configuration may omit the need for a laser level planer and a total station.

The third embodiment employs the self-propelled ground vehicle 55 as a moving vehicle, in which the self-propelled function may be omitted, and the vehicle may instead be configured to be moved manually by a worker.

Alternatively, the moving vehicle may implement a tracking function that allows the vehicle to track and follow a person.

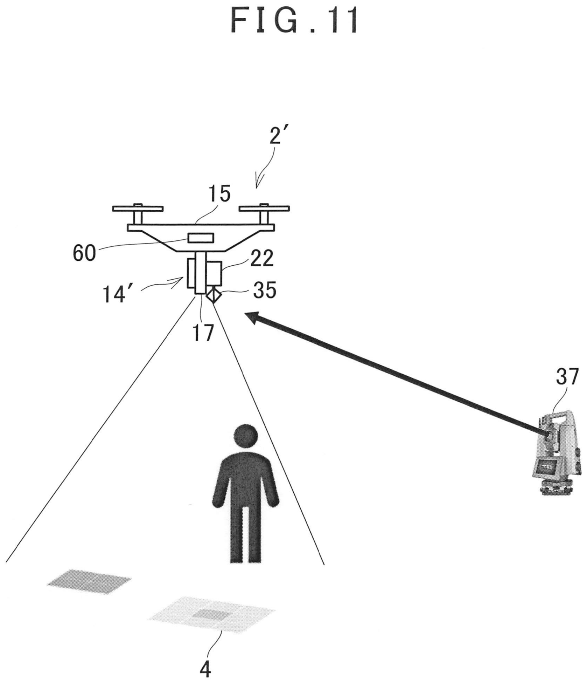

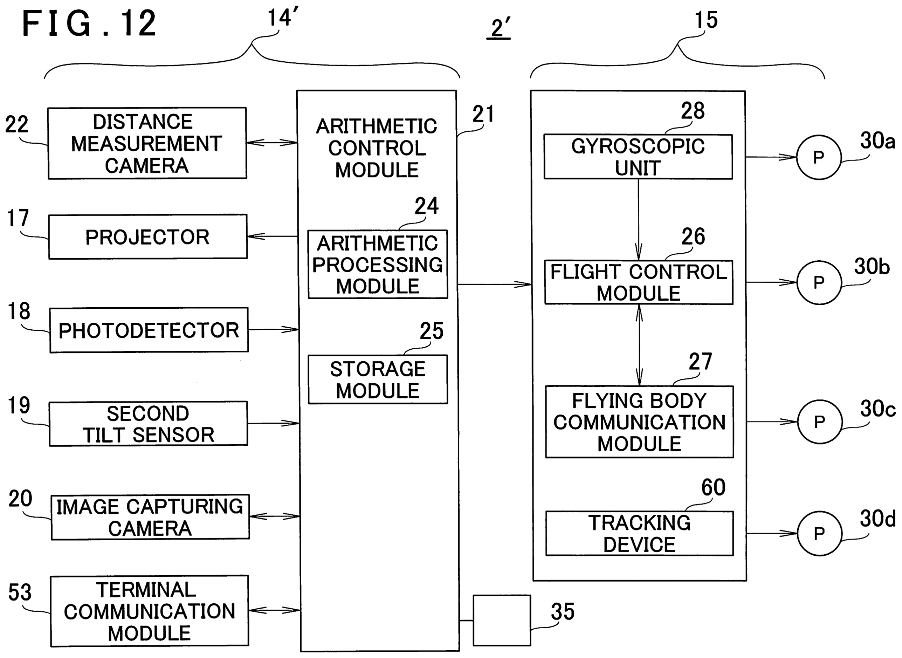

With reference to FIG. 11 and FIG. 12, a fourth embodiment will be described. In the fourth embodiment, a height measuring device 1 is embodied as a total station 37, and a drone 15, serving as a moving vehicle, is equipped with a tracking device allowing the moving vehicle to track and follow a person's movement. The components shown in FIGS. 11 and 12 and their corresponding components shown in FIGS. 3, 6, and 8 are denoted by the same reference numerals, and their detailed description are omitted.

Some commercially available drone 15 includes a tracking device 60 that recognizes a person from an image captured by an onboard camera, detects a person's movement from the image, and allows the drone 15 to track and follow the person based on the detected movement. In the fourth embodiment, such a drone 15 with the tracking device 60 is employed.

When a worker moves to a construction location, the tracking device 60 recognizes the worker, and allows the drone 15 to track the worker and move to the construction location.

When the worker begins working at the construction location, the tracking device 60 recognizes the worker's movement, determines a working range of the worker and a center position of the working range, and allows the drone 15 to hover above the center position.

The total station 37 measures a three-dimensional position of the prism 35 mounted on the drone 15 (or on the unevenness measuring device 14') and transmits distance measurement data to the unevenness measuring device 14'. The unevenness measuring device 14' acquires a reference level from the received height information of the three-dimensional position. The unevenness measuring device 14' measures distance using the distance measurement camera 22, determines a height of the measurement reference position of the unevenness measuring device 14' based on the reference level, and performs an unevenness measurement using the height of the measurement reference position as a reference level.

The height of the measurement reference position is further transmitted to a flight control module 26, and the flight control module 26 maintains the drone 15 at an appropriate attitude.

In the fourth embodiment, the total station 37 and the prism 35 together function as a reference level measuring device to measure a reference level for the unevenness measurement.

When the worker completes the work and starts moving away from the location, the drone 15 follows the worker and moves to the next construction location. In this case, the worker's intention-whether to perform a construction operation or to move away-may be determined based on whether the worker's movement includes a repetitive motion.

The worker may further put on a recognition marker to facilitate easier recognition of the worker. For example, the marker may be attached to the worker's helmet, such as on its upper surface. Alternatively, the marker may be attached the worker's vest. Alternatively, the marker may be attached to the worker's leveling tool, such as a leveling float.

Such a recognition marker facilitates recognition of the worker's working direction and working position from the orientation of the marker, thereby allowing the tracking device 60 to prevent misidentification of the worker even when multiple workers are working.

In the fourth embodiment, the creation of an unevenness map 4 after unevenness measurement and the projection of an unevenness map image onto a construction surface are the same as those of the first embodiment, and hence a description thereof are omitted.

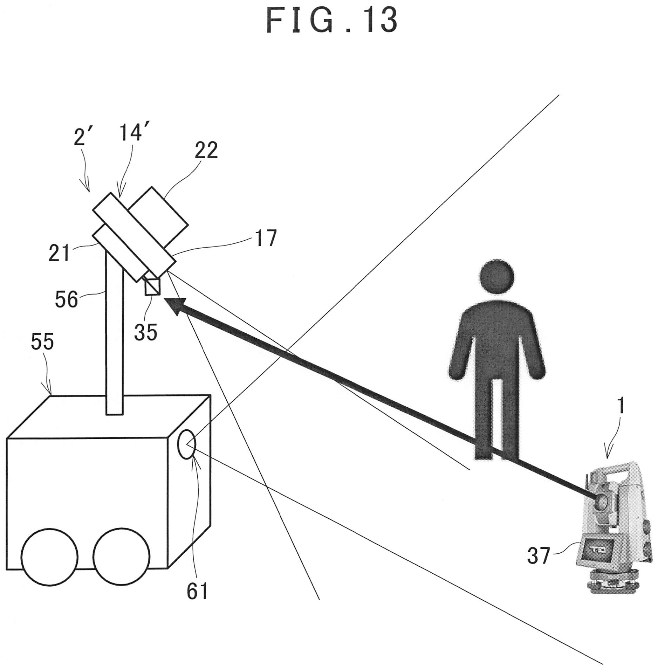

FIG. 13 illustrates a fifth embodiment having a configuration similar to that of the third embodiment, in which a ground vehicle 55 further includes a tracking device 61 that tracks a person.

The tracking device 61, which includes a camera, recognizes a worker from an image acquired with the camera and detects the worker's movement from the image, and allows the ground vehicle 55 to track and follow the worker.

When the worker completes the work at a predetermined location and starts moving to the next construction location, the ground vehicle 55 follows the worker and moves to the next construction location.

The creation of an unevenness map 4 after unevenness measurement and the projection of an unevenness map image onto a construction surface in the fifth embodiment are the same as those of the first embodiment, and hence a description thereof are omitted.

In the first through fifth embodiments, a laser level planer 3 or a total station 37 is employed to acquire height information for a measurement reference level. However, when a moving vehicle equipped with a GNSS device that obtains three-dimensional coordinates of its own position, height information may be acquired from the coordinates obtained by the GNSS device and used as a measurement reference level. The working position of the worker may be determined based on horizontal components of the three-dimensional coordinates.

A moving vehicle may further include a Simultaneous Localization and Mapping (SLAM) device and/or an Inertial Navigation System (INS) device that estimates a current position, from which height information may be acquired for use as a measurement reference level or from which the working position of the worker may be determined.

The moving vehicle equipped with the GNSS device, the SLAM device, or the INS device may eliminate the need for a height measuring device 1 including a laser level planer 3 and a total station 37 .

In the first through fifth embodiments, the recognition marker described in the fourth embodiment may also be employed to facilitate determining the worker's intention-whether to perform a construction operation or to move away-and determining the worker's working range and a central position thereof.

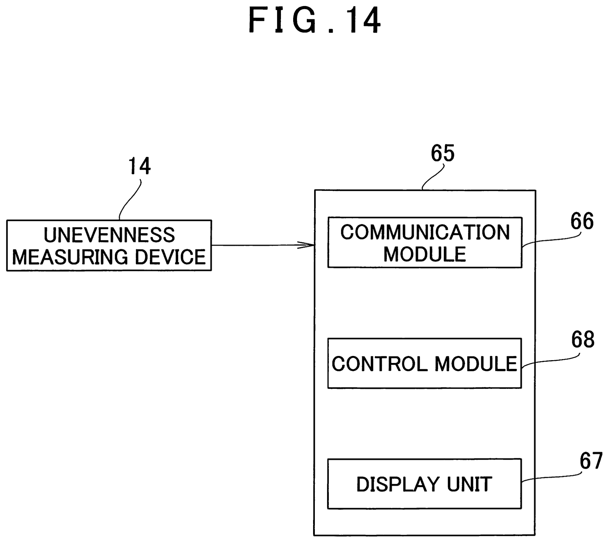

FIG. 14 illustrates a sixth embodiment, in which the surveying system may further include a terminal device 65. The terminal device 65, which may include a communication module 66 and a display unit 67, may be implemented as, for example, a smartphone or a portable PC.

The unevenness measuring device 14 transmits unevenness information data and an unevenness map to the terminal device 65. The terminal device 65 displays the unevenness information data and the unevenness map received from the communication module 66 on the display unit 67. FIG. 14 shows a control module 68, which controls the communication module 66 for data communication and the display unit 67 for information display.

Displaying the unevenness information data and the unevenness map on the display unit 67 of the terminal device 65 allows the worker to observe the unevenness information at any desired position. In this embodiment, the projector 17 may be omitted.

Although the embodiments have been described as measuring unevenness on a measurement target surface or a construction surface, the embodiments may also be applied to determine a tilt with respect to horizontality by measuring a deviation from a predetermined height (which corresponds to a construction finished surface) of the measurement target surface or the construction surface, or by measuring several points on the construction surface.

Additionally, the present disclosure may also be applied to leveling materials other than concrete, such as sand, gravel, or beads.

**Reference Numeral List**

1 Height measuring device
2 High-low deviation measuring device
3 Laser level planer
4 Unevenness map
5 Control module
6 First tilt sensor
14 Unevenness measuring device
15 Drone
17 Projector
18 Photodetector
19 Second tilt sensor
21 Arithmetic control module
22 Distance measurement camera
24 Arithmetic processing module
35 Prism
37 Total station
55 Ground vehicle
60 Tracking device
61 Tracking device
65 Terminal device

**Claims**

1.  A surveying system comprising:

      a height measuring device and
      a high-low deviation measuring device,
      wherein the high-low deviation measuring device comprises:

            a measurement target,
            a moving vehicle, and
            an unevenness measuring device mounted on the moving vehicle,

      wherein a reference level measuring device comprises the height measuring device and the measurement target,
      the reference level measuring device is configured to detect a reference level,
      wherein the high-low deviation measuring device further comprises:

            a distance measurement sensor positioned to satisfy a predetermined positional relationship with the measurement target and configured to measure a distance to a construction surface,
            a projector configured to project high-low information onto a construction surface, and
            an arithmetic control module configured to calculate the high-low information based on the reference level, distance information with respect to the construction surface measured by the distance measurement sensor, and a designed height of a construction finished surface.

2.  The surveying system according to Claim 1,

      wherein the height measuring device forms a horizontal reference plane with a predetermined height, and
      wherein the measurement target is a photodetector configured to detect the horizontal reference plane, and the arithmetic control module is further configured to calculate the reference level based on a detected result of the photodetector.

3.  The surveying system according to Claim 1,

      wherein the measurement target is a prism,
      wherein the height measuring device is a surveying instrument which is provided at a predetermined height, and has a tracking function and a TS communication module configured to transmit measurement results of the measurement target,
      wherein the high-low deviation measuring device comprises a terminal communication module configured receive measurement results from the TS communication module, and
      wherein the arithmetic control module is further configured to acquire the measurement results via the terminal communication module and calculate the reference level based on the measurement results.

4.  The surveying system according to any one of Claims 1 to 3,

      wherein the high-low deviation measuring device further comprises a tilt sensor, and
      wherein the arithmetic control module is further configured to correct the high-low information based on a detection result of the tilt sensor.

5.  The surveying system according to Claim 1 or 2, wherein the high-low deviation measuring device further comprises a tilt sensor, and
      wherein the arithmetic control module is configured to correct distance measurement results of the distance measurement sensor based on a detection result of the tilt sensor.

6.  The surveying system according to Claim 1,
      wherein the moving vehicle is a drone.

7.  The surveying system according to Claim 1,
      wherein the moving vehicle is a ground vehicle.

8. The surveying system according to Claim 1, 6 or 7,
   wherein the moving vehicle comprises a tracking device and is configured to follow a person's movement.

# FIG.1

# FIG.2

# FIG.3

EP 4 696 982 A1

FIG.4

EP 4 696 982 A1

# FIG.5

| | |
|---|---|
| STEP 01 | INSTALL REFERENCE HEIGHT MEASURING DEVICE |
| STEP 02 | FORM HORIZONTAL REFERENCE PLANE |
| STEP 03 | GIVE COMMAND TO MOVING VEHICLE TO VERTICALLY MOVE TOWARD THE HORIZONTAL REFERENCE |
| STEP 04 | DETECT HORIZONTAL REFERENCE PLANE BY PHOTODETECTOR |
| STEP 05 | MEASURE USING TILT SENSOR |
| STEP 06 | DETECT TILT BY TILT SENSOR |
| STEP 07 | CORRECT MEASUREMENT RESULTS |
| STEP 08 | MEASURE HEIGHT OF CONSTRUCTION SURFACE |
| STEP 09 | CALCULATE UNEVENNESS INFORMATION |
| STEP 10 | CREATE UNEVENNESS MAP BASED ON UNEVENNESS INFORMATION |
| STEP 11 | PROJECT UNEVENNESS MAP ONTO CONSTRUCTION SURFACE |

# FIG.6

# FIG.7

EP 4 696 982 A1

# FIG.8

PRISM

35

14'

21

ARITHMETIC
CONTROL
MODULE

DISTANCE
MEASUREMENT
CAMERA

22

24 — ARITHMETIC
PROCESSING
MODULE

PROJECTOR

17

SECOND TILT SENSOR
(IMU)

19

25 — STORAGE
MODULE

TERMINAL
COMMUNICATION
MODULE

53

IMAGE CAPTURING
CAMERA

20

# FIG.9

EP 4 696 982 A1

# FIG.10

# FIG.11

# FIG.12

15
28 GYROSCOPIC UNIT
26 FLIGHT CONTROL MODULE
27 FLYING BODY COMMUNICATION MODULE
60 TRACKING DEVICE

30a P
30b P
30c P
30d P

2'
35

14'
21 ARITHMETIC CONTROL MODULE
24 ARITHMETIC PROCESSING MODULE
25 STORAGE MODULE

22 DISTANCE MEASUREMENT CAMERA
17 PROJECTOR
18 PHOTODETECTOR
19 SECOND TILT SENSOR
20 IMAGE CAPTURING CAMERA
53 TERMINAL COMMUNICATION MODULE

# FIG.13

# FIG.14

14

UNEVENNESS
MEASURING DEVICE

65

COMMUNICATION
MODULE                    66

CONTROL MODULE            68

DISPLAY UNIT              67

## INTERNATIONAL SEARCH REPORT

| International application No. |
|---|
| **PCT/JP2024/014405** |

### A. CLASSIFICATION OF SUBJECT MATTER

***G01C 15/00***(2006.01)i

FI: G01C15/00 103C; G01C15/00 103E

According to International Patent Classification (IPC) or to both national classification and IPC

### B. FIELDS SEARCHED

Minimum documentation searched (classification system followed by classification symbols)

G01C1/00-1/14; G01C5/00-G01C15/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2016/031504 A1 (KABUSHIKI KAISHA TOPCON) 03 March 2016 (2016-03-03) paragraphs [0011]-[0052], fig. 1-11 | 1-8 |
| Y | JP 7-49228 A (SEKISUI CHEMICAL CO., LTD.) 21 February 1995 (1995-02-21) paragraphs [0011]-[0016], fig. 1, 2, 5 | 1-8 |
| Y | JP 2019-053003 A (KABUSHIKI KAISHA TOPCON) 04 April 2019 (2019-04-04) paragraphs [0015]-[0032], fig. 1-4 | 6, 8 |
| P, A | JP 2023-050332 A (KABUSHIKI KAISHA TOPCON) 11 April 2023 (2023-04-11) entire text, all drawings | 1-8 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/014405**

| Patent document cited in search report | | | Publication date (day/month/year) | Patent family member(s) | | | Publication date (day/month/year) |
|---|---|---|---|---|---|---|---|
| WO | 2016/031504 | A1 | 03 March 2016 | US | 2017/0252918 | A1 | |
| | | | | paragraphs [0044]-[0085], fig. 1-11 | | | |
| | | | | EP | 3187824 | A1 | |
| | | | | CN | 106716061 | A | |
| JP | 7-49228 | A | 21 February 1995 | (Family: none) | | | |
| JP | 2019-053003 | A | 04 April 2019 | US | 2019/0086548 | A1 | |
| | | | | paragraphs [0022]-[0042], fig. 1-4 | | | |
| JP | 2023-050332 | A | 11 April 2023 | US | 2023/0097350 | A1 | |
| | | | | whole document | | | |
| | | | | EP | 4160144 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0749228 A
- JP 6130078 A
- US 20110235053 A
- JP 2005140523 A
- JP 2006084346 A
- JP H09210687 A
- JP 2004045159 A